# EUROPEAN PATENT SPECIFICATION

(11) **EP 1 547 813 B1**
(45) Date of publication and mention of the grant of the patent: **02.01.2008**
(21) Application number: 04009826.1
(22) Date of filing: 26.04.2004
(51) Int. Cl.: B60B 27/00, F16C 33/66, F16C 33/72, F16C 33/76, F16C 33/78

(54) **Wheel hub-bearing unit for a vehicle**
Radlagereinheit für ein Fahrzeug
Palier de roue de véhicule pour véhicule

(30) Priority: 24.12.2003 IT TO20031040
(43) Date of publication of application: 29.06.2005
(73) Proprietor: Akiebolaget SKF, 415 50 Goteborg (SE)
(72) Inventor: Vignotto, Angelo, 10134 Torino (IT); Savarese, Claudio, 10060 Airasca (Torino) (IT)
(74) Representative: Lotti, Giorgio

(56) References cited:
- US-A- 4 422 516
- US-A- 5 026 324
- US-A- 5 172 984
- US-A- 6 050 571

## Description

The present invention relates to a wheel hub-bearing unit for a vehicle.

Wheel hub-bearing units of a well-known type comprise a central cylindrical housing for the insertion of a semi-axis of the vehicle, a fixing flange for fixing the unit to a suspension of the vehicle itself, and a rolling bearing which is provided with lubricating grease in its own interior, and which in turn comprises an inner race which defines the cylindrical housing, and which is provided with an attaching flange for a braking device, an outer race which is integral with the fixing flange, and a sealing device, which is indispensable in applications in which the bearing interfaces with lubricating fluids, and which is mounted in correspondence with an outer side end and with an inner side end of the bearing in order to seal the bearing itself.

In the types of wheel hub-bearing units which have just been described above, the sealing device is the element which is most subject to wear and which undergoes the most eventual damage as a result of factors arising from the manufacturing and management processes, as well as from factors arising from erroneous methods of use. The sealing device, in fact, may permit the infiltration of lubricating fluid into the bearing via the inner side end, as well as any eventual leakage from the outer side end of the lubricating fluid itself when it is diluted by the lubricating grease, considering that the sealing device is designed to waterproof the bearing from external agents by means of the outer side itself.

Any such eventual leakage constitutes an extremely serious disadvantage as, due to centrifugal action or simply the force of gravity, the mixture of fluid and lubricating grease has a tendency to infiltrate into the braking device, and with the aim of limiting the occurrence of this leakage as much as possible not only does the sealing device present characteristics of elevated sealing and extra anti-damage protection in terms of the outer side end, but the outer race of the bearing has also been provided with at least two borders, which are created in a single piece on the external diameter of the outer race parallel to a rotation axis of the bearing, and which present an axially increasing height towards the inner side of the bearing in order to convey the above-mentioned leakage towards the inner side itself, or rather towards a less critical zone in relation to the outer side zone.

Despite the presence of the borders, however, the danger of the mixture of fluid and lubricating grease infiltrating into the braking device has not been totally avoided and, furthermore, the creation of the borders themselves involves the adoption of quite complicated and expensive manufacturing techniques.

A possible known solution which could overcome the above-described problems consist of providing the wheel bearing unit with an oil discharging device which is mounted onto the outer side of the bearing in order to discharge any eventual leakage of viscous fluid from the bearing itself and away from the disk brake, and which comprises an annular shield.

Such a wheel bearing with an oil discharging device according to the preamble of claim 1 is known from US 4 422 516 A.

The annular shield is mounted onto the outer race in order to face axially the outer race itself, and comprises a cup-shaped tile whose bottom wall is freely engaged by the semi-axis of the vehicle, and whose annular edge faces the bearing.

Despite the cup-shaped tile almost collects the eventual leakages of viscous fluid from the bearing and the annular edge is quite able to convey these leakages outside the bearing itself, the aforementioned oil discharging device not only does not overcome the danger of the mixture of fluid and lubricating grease infiltrating into the braking device, but also it is quite difficult both quickly to mount onto the bearing and to assemble it with the wheel hub-bearing unit.

The aim of the present invention is to produce a wheel hub-bearing unit which will not only resolve the problem of the disadvantages related to any eventual leakage of a mixture of fluid and lubricating grease onto the outer side of the bearing, but will also make it possible to create the outer race of the bearing without the above-mentioned borders thereby simplifying not only the manufacture of the entire wheel hub-bearing unit itself but also the structure of any oil discharging device mounted onto the bearing.

According to the present invention a wheel hub-bearing unit for a vehicle will be produced, comprising:
- a central cylindrical housing for the insertion of a semi-axis of the vehicle;
- a rolling bearing which presents an inner side and an outer side, and which is provided with an inner race engaged by said semi-axis and an outer race which is integral with the fixing flange and co-axial to the inner race and to a rotation axis of the bearing itself; and
- collecting and conveying means mounted onto the outer side to collect any eventual leakage of viscous fluid from the bearing and convey them toward the inner side;
the unit being characterised by the fact that the collecting and conveying means are provided with:
- an annular cover which closes the outer side in an axial and radial direction and which is mounted to abut the outer side;
- a number of axial spacers which are situated inside the cover to create an axial gap between the annular cover and the outer side;
- a cylindrical wall which belongs to the annual cover and closes the outer side in an radial direction; and with
- snapping means to connect the annular cover to the outer race and to create an radial gap between the annular cover and the outer race.

The invention will now be described with reference to the attached drawings, which illustrate a non-limiting form of embodiment of the present invention and in which:
- FIGURE 1 illustrates, with some parts in section and some parts removed for reasons of clarity, a preferred form of embodiment of a wheel hub-bearing unit according to the present invention; and
- FIGURE 2 is a perspective view, on a reduced scale, of a detail shown in FIGURE 1.

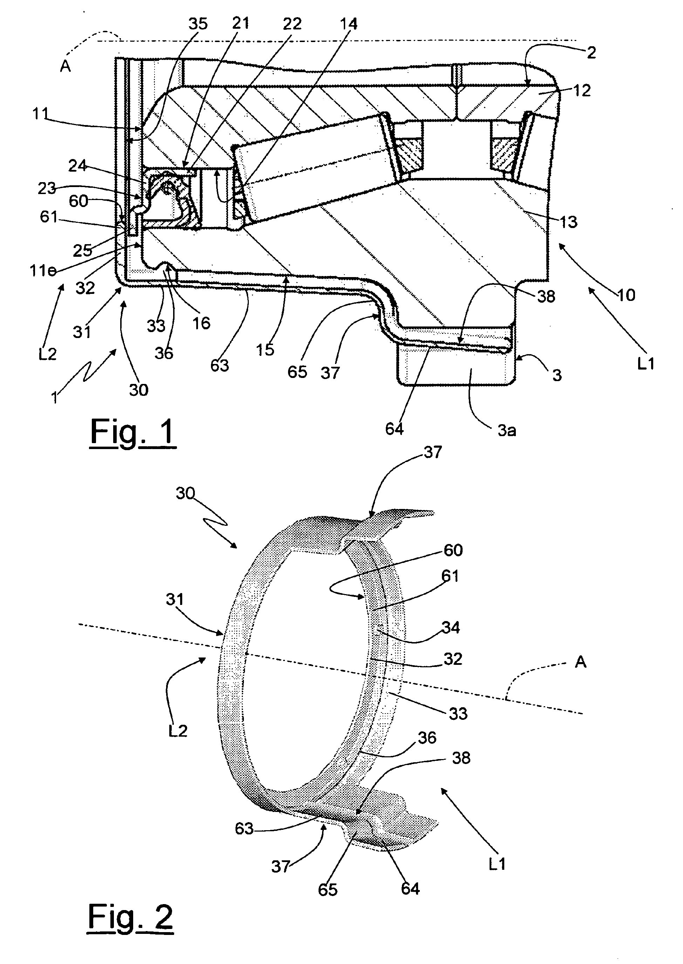

With reference to FIGURE 1, the number 1 indicates a wheel hub-bearing unit for a vehicle in its entirety.

The unit 1 comprises a central cylindrical housing 2 for the insertion of a semi-axis (noted but not illustrated) of a vehicle, and a lobe-fixing flange 3 for fixing the unit 1 to a suspension (noted but not illustrated) of the vehicle itself.

The unit 1 also comprises a rolling bearing 10 which presents a rotation axis A, and which is axially delimited by an inner side L1, or rather by a side which is turned towards the above-mentioned semi-axis, and by an outer side L2, or rather by a side which is turned towards the outside of the vehicle, defined by an external surface 11 which is transverse to the axis A. The bearing 10 comprises an inner race 12 which is co-axial to the axis A and which defines the cylindrical housing 2, and an outer race 13 which is co-axial to the race 12 and is integral with the fixing flange 3.

In particular, the inner race 12 is radially delimited towards the outside by a cylindrical surface 14 which is transverse to the surface 11, while the outer race 13 is radially delimited by a conical surface 15, from which the flange 3 branches in a radial direction, and is axially delimited, on the side L2, by an annular portion 11e of the surface 11. The race 13 also presents an external annular groove 16 which is obtained on the surface 15 near the annular portion 11e of the surface 11.

The unit 1 also comprises a sealing device 20, which is interposed between the races 12 and 13 in order to waterproof the bearing 10, and which comprises a shield 21, which is made of metallic material, and which is force fit onto the surface 14 of the inner race 12. The shield 21 is defined by a cylindrical wall 22 which s force fit onto the surface 14, and by a shaped flange 23, which is transverse to and integral with the wall 22 itself, and which extends externally to the bearing 10 on the side L2 as far as to be arranged in an axially frontal position to the portion 11e of the race 13. In particular, the flange 23 presents two annular walls 24 and 25 which are transverse to the axis A, and of which the wall 24 is directly integral with the wall 22 and extends substantially close to the surface 11, while the wall 25 axially projects beyond the surface 11 parallel to the surface 11 itself, and radially extends as far as the portion 11e.

According to the illustration which is shown in FIGURE 2, the unit 1 comprises, finally, a collecting and conveying device 30, which is mounted on the outer side L2 of the bearing 10 in such a way that it may be disassembled and in order to collect and convey any eventual leakage of viscous fluid from the bearing 10 towards the inner side L1 of the bearing 10 itself.

The device 30 comprises an annular cover 31, which is mounted in such a way as to abut the outer side L2 of the bearing 10, and which is provided with an annular wall 32 which is arranged transverse to the axis A and in an axially frontal position in relation to the wall 25 of the flange 23, and which is also provided with a cylindrical wall 33, which is integral with and transverse to the annular wall 32, and which closes the outer side L2 in an axial direction.

The annular wall 32 defines an internal circular hole 60, which presents an inner diameter which is of a greater dimension than the dimension of an inner diameter of the housing 2 and a lesser dimension than the dimension of an inner diameter of the portion 11e, and is peripherally delimited by a circular border 61 which axially faces the wall 25 of the flange 23.

The device 30 also comprises a number of spacers 34, which are uniformly distributed around the axis A, and are arranged on the annular wall 32, in a single piece with the annular wall 32, and from the wall of the annular wall 32 are turned towards the bearing 10. The spacers 34 are arranged below the portion 11e, and each present a determined axial thickness S which is such as to leave between the surface 11 and the annular wall 32 itself an axial gap 35 of dimensions which are sufficient to permit the flange 23 to be arranged between the annular portion 32 and the portion 11e of the surface 11.

The device 30 also comprises a circumferential rib 36, which is obtained inside the cylindrical wall 33, and which is coupled to the groove 16 in such a way that it may be disassembled. As the cover 31 is preferably, but not necessarily, made of plastic material, the conformation of the walls 32 and 33 and the consistency of the cover 31 itself permit that the device 30 may be snap mounted onto the outer race 13 of the bearing 10, as well as permitting the eventual subsequent disassembly of the device 30 itself.

Finally, the device 30 comprises two conveying tiles 37, which are arranged diametrically opposite to the outer race 13, and which stretch along the surface 15 of the outer race 13 itself starting from the cylindrical wall 33.

The tiles 37 are made in a single piece with the cover 31 and they each run in a substantially axial direction on the surface 15 following the outline and maintaining a determined distance from the surface 15 itself, and they each present a respective drainage channel 38, which faces towards the surface 15, and which also passes across the rib 36 terminating in correspondence to the annular wall 32.

Each tile 37, which presents a substantially semi-cylindrical form and which is axially shaped in the same way as the surface 15, extends as far as the flange 3, or, to be more exact, extends in the space which is comprised between two lobes 3a of the flange 3 itself in order to join the relative channel 38 with the inner side L1 of the bearing 10.

In particular, each tile 37 comprises an anchoring cylindrical portion 63 which is integral with the cylindrical wall 33 and which presents a same radius of curvature in relation to the cylindrical wall 33 itself, and an end portion 64, which presents a diameter of a dimension which is greater than a diameter of the portion 63, a radius of curvature similar to the above-mentioned radius of curvature of the portion 63 itself, and which is radially arranged outside the flange 3, or rather between two lobes 3a of the flange 3 itself. Finally, each tile 37 comprises a connecting portion 65, which connects the relative portion 63 to the relative portion 64, and which is arranged in a direction which is substantially transverse to the axis A.

The channel 38 of each tile 37 runs parallel to the axis A along the three portions 63, 65 and 64, and when it approaches the inner side L1 it presents a diameter of increasing dimensions in order to encourage the flow of any eventual viscous fluid towards the inner side L1 itself.

As the outer race 13 is a fixed race, and as any eventual leakage of fluid from the bearing 10 will exit from the bearing 10 itself due to the force of gravity, the cover 31 is mounted onto the outer race 13 in such a way that the two tiles are arranged in alignment on a vertical directix which passes through the axis A.

In the case that any leakage of viscous fluid occurs from the inside towards the outside of the bearing 10 and towards the outer side L2 of the bearing 10 itself, the shield 21 provides first of all for the diversion of any such leakage in a radial direction towards the cylindrical wall 34 of the cover 31. So any such leakage is conveyed from the cylindrical wall 34 towards the channel 38 which is arranged beneath the bearing 10, and flows along the channel 38 itself towards the inner side L1 of the bearing 10, or rather away from the outer side L2.

It is intended that the present invention should not be limited to the form of embodiment which is herein described and illustrated, which is to be considered as an example of a form of embodiment for a wheel hub-bearing unit for a vehicle, which might be subject to further modifications pertaining to the shape and disposition of the parts, and to details regarding construction and assembly.

## Claims

1. Wheel hub bearing unit (1) for a vehicle comprising:
- a central cylindrical housing (2) for the insertion of a semi-axis of the vehicle;
- a rolling bearing (10) which presents an inner side (L1) and an outer side (L2), and which is provided with an inner race (12) engaged by said semi-axis and an outer race (13) which is integral with the fixing flange (3) and co-axial to the inner race (12) and to a rotation axis (A) of the bearing (10) itself; and
- collecting and conveying means (30) mounted onto the outer side (L2) to collect any eventual leakage of viscous fluid from the bearing (10) and convey them toward the inner side (L1);
the unit (1) being **characterised by** the fact that the collecting and conveying means (30) are provided with:
- an annular cover (31) which closes the outer side (L2) in an axial and radial direction and which is mounted to abut the outer side (L2);
**characterized in that** if further comprises :
- a number of axial spacers (34) which are situated inside the cover (31) to create an axial gap (35) between the annular cover (31) and the outer side (L2);
- a cylindrical wall (33) which belongs to the annual cover (31) and closes the outer side (L2) in an radial direction; and with
- snapping means (36) to connect the annular cover (31) to the outer race (13) and to create an radial gap (X) between the annular cover (31) and the outer race (13).

2. Unit according to Claim 1, **characterised by** the fact that the outer race (13) of the bearing (10) presents an annular surface (11e) which is transverse to the rotation axis (A) and which defines the said outer side (L2); the said axial spacers (34) being arranged in such a way as to abut the annular surface (11e).

3. Unit according to Claim 2, **characterised by** the fact that the outer race (13) of the bearing (10) presents an external annular groove (16) which is obtained close to the annular surface (11e); the snapping means (36) comprising a circumferential rib (36) which is obtained inside the said cylindrical wall (33), and which is assembled in such a way that it may be disassembled from the said groove (16).

4. Unit according to Claim 3, **characterised by** the fact that the said annular cover (31) comprises an annular wall (32), which is transverse to and integral with the said cylindrical wall (33), and which defines the axial gap (35) with the annular surface (11e), the axial spacers (34) being integral with the annular wall (32) to determine the axial dimensions of the axial gap (35).

5. Unit according to Claim 4, **characterised by** the fact that the said collecting and conveying means (30) comprise at least two axial tiles (37), which are integral with the said cover (31) and which run in a substantially axial direction on an external surface (15) of the outer race (13) of the bearing (10) starting from the said cylindrical wall (33).

6. Unit according to Claim 5, **characterised by** the fact that each axial tile (37) comprises a drainage channel (38) which faces towards the external surface (15) of the outer race (13) and which also passes along said radial gap (X) and across said rib (36).

7. Unit according to Claims 5 or 6, **characterised by** the fact that each axial tile (37) is arranged at a determined distance from the outer surface of the outer race (13).

8. Unit according to Claims 5, 6, or 7, **characterised by** the fact that it comprises a fixing flange (3) for fixing the unit (1) to a suspension of the vehicle; each tile extending onto the fixing flange (3) and presenting a shaped axial form.

9. Unit according to any of the preceding Claims, **characterised by** the fact that it comprises a sealing device (20) which is provided with a shield (21) which extends frontally to the said outer side (L2), and radially towards the outside of the said bearing (10) inside said axial gap (35).

10. Unit according to Claim 9, **characterised by** the fact that the said shield (21) is force fit onto the inner race (12) and presents a flange (3) which is arranged in an axially frontal position in relation to the said outer race (13).

## Patentansprüche

1. Radnabenlagereinheit (1) für ein Fahrzeug, umfassend:
- ein mittleres zylinderförmiges Gehäuse (2) zum Einsetzen einer Halbachse des Fahrzeugs;
- ein Wälzlager (10), das eine Innenseite (L1) und eine Außenseite (L2) zeigt, und das mit einem inneren Laufring (12), der einen Eingriff durch die Halbachse erfährt, und mit einem äußeren Laufring (13), der integral mit dem Fixierflansch (3) ausgeführt ist und koaxial zu dem inneren Laufring (12) und zu einer Drehachse (A) des Lagers (10) selbst ausgeführt ist, versehen ist; und
- ein Sammel- und Beförderungsmittel (30), das an der Außenseite (L2) angebracht ist, um jeglichen möglichen Austritt eines viskosen Fluids aus dem Lager (10) zu sammeln und diesen zur Innenseite (L1) zu befördern;
wobei die Einheit (1) **dadurch gekennzeichnet ist, dass** das Sammel- und Beförderungsmittel (30) mit Folgendem versehen ist:
- einer ringförmigen Abdeckung (31), die die Außenseite (L2) in einer axialen und in einer radialen Richtung verschließt und so angebracht ist, dass sie auf die Außenseite (L2) trifft;
**dadurch gekennzeichnet, dass** sie ferner Folgendes umfasst:
- eine Anzahl von axialen Distanzstücken (34), die sich innerhalb der Abdeckung (31) befinden, um zwischen der ringförmigen Abdeckung (31) und der Außenseite (L2) einen axialen Zwischenraum (35) zu schaffen;
- eine zylinderförmige Wand (33), die zur ringförmigen Abdeckung (31) gehört und die Außenseite (L2) in einer radialen Richtung verschließt; und
- ein Einschnappmittel (36), um die ringförmige Abdeckung (31) mit dem äußeren Laufring (13) zu verbinden und um zwischen der ringförmigen Abdeckung (31) und dem äußeren Laufring (13) einen radialen Zwischenraum (X) zu schaffen.

2. Einheit nach Anspruch 1, **dadurch gekennzeichnet, dass** der äußere Laufring (13) des Lagers (10) eine ringförmige Fläche (11e) zeigt, die quer zur Drehachse (A) verläuft, und die die Außenseite (L2) definiert; wobei die axialen Distanzstücke (34) auf eine solche Weise angeordnet ist, dass sie auf die ringförmige Fläche (11e) treffen.

3. Einheit nach Anspruch 2, **dadurch gekennzeichnet, dass** der äußere Laufring (13) des Lagers (10) eine äußere ringförmige Rille (16) zeigt, die dicht an der ringförmigen Fläche (11e) vorhanden ist; wobei das Einschnappmittel (36) eine umfängliche Rippe (36) umfasst, die in der zylinderförmigen Wand (33) erhalten ist, und die auf eine solche Weise montiert ist, dass sie von der Rille (16) gelöst werden kann.

4. Einheit nach Anspruch 3, **dadurch gekennzeichnet, dass** die ringförmige Abdeckung (31) eine ringförmige Wand (32) umfasst, die quer zur zylinderförmigen Wand (33) verläuft und integral damit ausgeführt ist, und die mit der ringförmigen Fläche (11e) den axialen Zwischenraum (35) definiert, wobei die axialen Distanzstücke (34) integral mit der ringförmigen Wand (32) ausgeführt sind, um die axialen Abmessungen des axialen Zwischenraums (35) zu bestimmen.

5. Einheit nach Anspruch 4, **dadurch gekennzeichnet**, das das Sammel- und Beförderungsmittel (30) zumindest zwei axiale Platten (37) umfasst, die integral mit der Abdeckung (31) ausgeführt sind und beginnend von der zylinderförmigen Wand (33) in einer im Wesentlichen axialen Richtung auf einer Außenfläche (15) des äußeren Laufrings (13) des Lagers (10) verlaufen.

6. Einheit nach Anspruch 5, **dadurch gekennzeichnet, dass** jede axiale Platte (37) einen Ableitkanal (38) umfasst, der zur Außenfläche (15) des äußeren Laufrings (13) gerichtet ist, und der auch entlang des radialen Zwischenraums (X) und über die Rippe (36) verläuft.

7. Einheit nach Anspruch 5 oder 6, **dadurch gekennzeichnet, dass** jede axiale Platte (37) in einem bestimmten Abstand von der Außenfläche des äußeren Laufrings (13) angeordnet ist.

8. Einheit nach Anspruch 5, 6 oder 7, **dadurch gekennzeichnet, dass** sie einen Fixierflansch (3) zum Fixieren der Einheit (1) an einer Aufhängung des Fahrzeugs umfasst; wobei sich jede Platte auf den Fixierungsflansch (3) erstreckt und eine geformte axiale Form zeigt.

9. Einheit nach einem der vorhergehenden Ansprüche, **dadurch gekennzeichnet, dass** sie eine Dichtungsvorrichtung (20) umfasst, die mit einer Abschirmung (21) versehen ist, welche sich vorderseitig zur Außenseite (L2) und im axialen Zwischenraum (35) radial zur Aussenseite des Lagers (10) erstreckt.

10. Einheit nach Anspruch 9, **dadurch gekennzeichnet, dass** die Abschirmung (21) auf den inneren Laufring (12) pressgepasst ist und einen Flansch (3) zeigt, der in Bezug auf den äußeren Laufring (13) in einer axial vorderseitigen Position angeordnet ist.

## Revendications

1. Unité de palier de moyeu de roue (1) pour un véhicule comprenant :
- un logement cylindrique central (2) pour l'insertion d'un semi-axe du véhicule ;
- un palier à roulement (10) qui présente un côté intérieur (L1) et un côté extérieur (L2), et qui est pourvu d'une bague de roulement intérieure (12) engagée par ledit semi-axe et une bague de roulement extérieure (13) qui est solidaire de la bride de fixation (3) et coaxiale à la bague de roulement intérieure (12) et à un axe de rotation (A) du palier (10) lui-même ; et
- des moyens de collecte et de transport (30) montés sur le côté extérieur (L2) pour collecter des fuites possibles quelconques de fluide visqueux à partir du palier (10) et les transporter vers le côté intérieur (L1) ;
l'unité (1) étant **caractérisée par le fait que** les moyens de collecte et de transport (30) sont pourvus de :
- un couvercle annulaire (31) qui ferme le côté extérieur (L2) dans une direction axiale et radiale et qui est monté pour être contigu au côté extérieur (L2) ;
**caractérisée en ce qu'**elle comprend en outre :
- un nombre d'entretoises axiales (34) qui sont situées à l'intérieur du couvercle (31) pour créer un espace axial (35) entre le couvercle annulaire (31) et le côté extérieur (L2) ;
- une paroi cylindrique (33) qui appartient au couvercle annulaire (31) et ferme le côté extérieur (L2) dans une direction radiale ; et de
- moyens de fixation immédiate (36) pour relier le couvercle annulaire (31) à la bague de roulement extérieure (13) et pour créer un espace radial (X) entre le couvercle annulaire (31) et la bague de roulement extérieure (13).

2. Unité selon la revendication 1, **caractérisée par le fait que** la bague de roulement extérieure (13) du palier (10) présente une surface annulaire (11e) qui est transversale à l'axe de rotation (A) et qui définit ledit côté extérieur (L2) ; lesdites entretoises axiales (34) étant agencées de manière telle à être contiguës à la surface annulaire (11e).

3. Unité selon la revendication 2, **caractérisée par le fait que** la bague de roulement extérieure (13) du palier (10) présente une rainure annulaire externe (16) qui est obtenue près de la surface annulaire (11e) ; les moyens de fixation immédiate (36) comprenant une nervure circonférentielle (36) qui est obtenue à l'intérieur de ladite paroi cylindrique (33), et qui est assemblée de manière telle qu'elle peut être désassemblée de ladite rainure (16).

4. Unité selon la revendication 3, **caractérisée par le fait que** ledit couvercle annulaire (31) comprend une paroi annulaire (32), qui est transversale à et solidaire de ladite paroi cylindrique (33), et qui définit l'espace axial (35) avec la surface annulaire (11e), les entretoises axiales (34) étant solidaires de la paroi annulaire (32) pour déterminer les dimensions axiales de l'espace axial (35).

5. Unité selon la revendication 4, **caractérisée par le fait que** lesdits moyens de collecte et de transport (30) comprennent au moins deux carreaux axiaux (37), qui sont solidaires dudit couvercle (31) et qui se trouvent dans une direction sensiblement axiale sur une surface externe (15) de la bague de roulement extérieure (13) du palier (10) commençant à partir de ladite paroi cylindrique (33).

6. Unité selon la revendication 5, **caractérisée par le fait que** chaque carreau axial (37) comprend un canal d'évacuation (38) qui est tourné vers la surface externe (15) de la bague de roulement extérieure (13) et qui passe également le long dudit espace radial (X) et à travers ladite nervure (36).

7. Unité selon les revendications 5 ou 6, **caractérisée par le fait que** chaque carreau axial (37) est agencé à une distance déterminée à partir de la surface extérieure de la bague de roulement extérieure (13).

8. Unité selon les revendications 5, 6 ou 7, **caractérisée par le fait qu'**elle comprend une bride de fixation (3) pour fixer l'unité (1) à une suspension du véhicule ; chaque carreau s'étendant sur la bride de fixation (3) et présentant une forme axiale façonnée.

9. Unité selon l'une quelconque des revendications précédentes, **caractérisée par le fait qu'**elle comprend un dispositif d'étanchéité (20) qui est pourvu d'un écran (21) qui s'étend de façon frontale jusqu'audit côté extérieur (L2), et de façon radiale vers l'extérieur dudit palier (10) à l'intérieur dudit espace axial (35).

10. Unité selon la revendication 9, **caractérisée par le fait que** ledit écran (21) est ajusté à force sur la bague de roulement intérieure (12) et présente une bride (3) qui est agencée dans une position frontale de façon axiale par rapport à ladite bague de roulement extérieure (13).
